# EUROPÄISCHE PATENTSCHRIFT

(11) **EP 1 345 790 B1**
(45) Veröffentlichungstag und Bekanntmachung des Hinweises auf die Patenterteilung: **07.03.2007**
(21) Anmeldenummer: 01995560.8
(22) Anmeldetag: 05.12.2001
(51) Int. Cl.: B60K 31/00

(54) **FAHRZEUG MIT WENIGSTENS EINEM SENSOR ZUR DETEKTION DES FAHRZEUGUMFELDS**
VEHICLE COMPRISING AT LEAST ONE SENSOR FOR DETECTING THE SURROUNDING AREA OF THE VEHICLE
VEHICULE COMPORTANT AU MOINS UN DETECTEUR POUR DETECTER LE CHAMP PERIPHERIQUE DUDIT VEHICULE

(30) Priorität: 05.12.2000 DE 10060288
(43) Veröffentlichungstag der Anmeldung: 24.09.2003
(73) Patentinhaber: ROBERT BOSCH GMBH, 70442 Stuttgart (DE)
(72) Erfinder: KLOTZ,, Albrecht, 72076 Tuebingen (DE); WEILKES, Michael, 74343 Sachsenheim (DE); UHLER, Werner, 76646 Bruchsal (DE)
(86) Internationale Anmeldenummer: PCT/DE2001/004527
(87) Internationale Veröffentlichungsnummer: WO 2002/045990

(56) Entgegenhaltungen:
- DE-A- 10 029 710
- DE-A- 19 831 071
- PATENT ABSTRACTS OF JAPAN vol. 018, no. 042 (P-1680), 21. Januar 1994 (1994-01-21) & JP 05 266400 A (NEC CORP;OTHERS: 01), 15. Oktober 1993 (1993-10-15)
- PATENT ABSTRACTS OF JAPAN vol. 1999, no. 01, 29. Januar 1999 (1999-01-29) & JP 10 289400 A (NIPPON SIGNAL CO LTD:THE), 27. Oktober 1998 (1998-10-27)

## Beschreibung

### Stand der Technik

Die heutige Fahrdynamikregelung basiert ausschließlich auf Informationen zu Fahrervorgabe, Fahrzustand des Fahrzeugs sowie Kraftschlußpotential zwischen Reifen und Straße. Die Einbettung des Fahrzeugs in seiner Umgebung - relativ zu Fahrspuren und anderen Objekten - wird nicht mit einbezogen.

Weiterhin sind Systeme zur adaptiven Abstands- und Geschwindigkeitsregelung bekannt. Diese Systeme verfügen über Sensoren, die insbesondere die Fahrzeuglängsführung betreffen. Übliche Sensoren basieren auf der Radar- oder Lidartechnologie.

Die DE 198 31 071 A1, die den Oberbegriff der Ansprüche 1 und 2 bildet, zeigt eine Vorgehensweise, nach welcher ein Kollisionsrisiko auf der Basis des aktuellen Lenkwinkels des Fahrzeugs und ermittelten Relativlage des Hindernisses bestimmt wird. Zur Kollisionsverhinderung wird dann in ein Lenksystem eingegriffen und zwar derart, dass ein Lenkwinkel eingestellt wird, der die mögliche Kollision verhindert. Zusätzlich kann dazu ein Bremsen- oder Motoreingriff erfolgen. Die Anwendung dieser Maßnahmen erfolgt dabei in Systemen zur Warnung des Fahrers bei Verlassen der Fahrspur. Das dort beschriebene System beschränkt sich auf eine Situation zweier parallel fahrender Fahrzeuge und den Fahrer warnt, wenn beispielsweise durch ein Fahrzeug im toten Winkel beim Spurwechsel ein Kollisionsrisiko vorhanden ist.

Entsprechendes gilt auch für das US-Patent 5 572 428.

### Vorteile der Erfindung

Das erfindungsgemäße Fahrzeug mit den Merkmalen der nebengeordneten Ansprüche hat demgegenüber den Vorteil, dass auch für den Fall, dass für das Fahrzeug ein Abbiegevorgang vorgesehen ist, eine Signalisierung dieser Situation mittels einer Warn- oder Hinweissignalisierung dem Fahrer mitgeteilt wird und/oder - bei Vorhandensein eines Bewegungszustandsaktors in dem Fahrzeug wie beispielsweise ein ESP-System (Elektronisches Stabilitätsprogramm) - sogar die Möglichkeit besteht, auf den Bewegungszustand des Fahrzeugs einzuwirken und so Unfälle oder für den Fahrzeugführer bzw. die Insassen und anderweitig Beteiligte gefährliche Situationen zu vermeiden.

Weiterhin ist von Vorteil, dass der Bewegungszustandsaktor in Abhängigkeit eines Lenkwinkels und einer Gierrate aktivierbar ist und dass der Bewegungszustandsaktor bei mangelnder Vereinbarkeit des Lenkwinkels und der Gierrate aktiviert wird. Hierdurch wird die Einhaltung der Fahrspur während eines Eingriffs des Bewegungszustandsaktors, also beispielsweise eines ESP-Eingriffs, unterstützt.

Weiterhin ist von Vorteil, dass der Bewegungszustandsaktor auch bei Vereinbarkeit des Lenkwinkels und der Gierrate aktiviert wird. Dadurch ist es möglich, bereits den Bewegungszustand des Fahrzeugs zu ändern, wenn noch kein fahrdynamischer Grenzbereich erreicht ist. Allein durch die Detektion des Abkommens von der Fahrbahn wird der Bewegungszustandsaktor aktiviert und die Fahrbahn wieder erreicht, ohne dass es zu einer kritischen Situation kommt, durch welche ein Bewegungszustandsaktor, wie beispielsweise in einem ESP-System, allein aufgrund des Erreichens eines fahrdynamischen Grenzbereiches aktiviert wird.

Weiterhin ist von Vorteil, dass die von dem Sensor detektierten Informationen zur Aktivierung des Bewegungszustandsaktors derart vorgesehen sind, dass auf eine Vermeidung der Begegnung des Fahrzeugs mit Hindernissen hingewirkt wird und/oder dass ein Verlassen der Fahrspur, die mit Hilfe des Sensors erkannt wird, vermieden wird. Dadurch ist es möglich, die Kenntnisse, die über Objekte in der Umgebung durch die Umgebungssensorik gewonnen werden, für die Fahrdynamikregelung oder für die Warnung des Fahrers bzw. des Fahrzeugführers nutzbar zu machen. Im einfachen Fall bezieht die Fahrdynamikregelung hier nur feststehende Objekte mit ein, in einer Erweiterung können zusätzlich auch bewegte Objekte wie z.B. entgegenkommende Fahrzeuge berücksichtigt werden, was aber zusätzlich zur Erfassung eine genauere Prädiktion ihrer Bewegung voraussetzt. Die Kenntnisse über die Objekte werden aus der Umgebungssensorik, z.B. Daten über Ort, Abstand, Differenzgeschwindigkeit zwischen den Objekten und dem Fahrzeug zur Verfügung gestellt. Hierdurch ist es also möglich, über die Vorgaben des Fahrers hinaus ein Ausweichen bei Hindernissen zu unterstützen bzw. eine Kollision während des Eingriffs der Fahrdynamikregelung in den Bewegungszustand des Fahrzeugs zu vermeiden.

Weiterhin ist von Vorteil, dass das Fahrzeug einen Fahrerwunschdetektor aufweist, wobei der Fahrerwunschdetektor vorgesehen ist, wenigstens einen Fahrerwunsch zu detektieren, wobei die Aktivierung des Bewegungszustandsaktors bei Detektion eines zur Aktivierung des Bewegungszustandsaktors zumindest teilweise entgegengesetzten Fahrerwunsches zumindest teilweise aufhebbar oder in ihrer Wirkung verringerbar vorgesehen ist. Dadurch ist es möglich, den vom Bewegungszustandsaktor vorgesehenen Eingriff manuell zu überstimmen.

### Zeichnung

Ein Ausführungsbeispiel der Erfindung ist in der Zeichnung dargestellt und in der nachfolgenden Beschreibung näher erläutert. Es zeigen
Figur 1 ein erfindungsgemäßes Kraftfahrzeug mit seinem Fahrzeugumfeld,
Figur 2 ein Blockschaltbild der Informationsverarbeitung in einem erfindungsgemäßen Fahrzeug und
Figur 3 einen Straßenabschnitt mit einer Verkehrssituation zum Einsatz des erfindungsgemäßen Fahrzeugs.

### Beschreibung

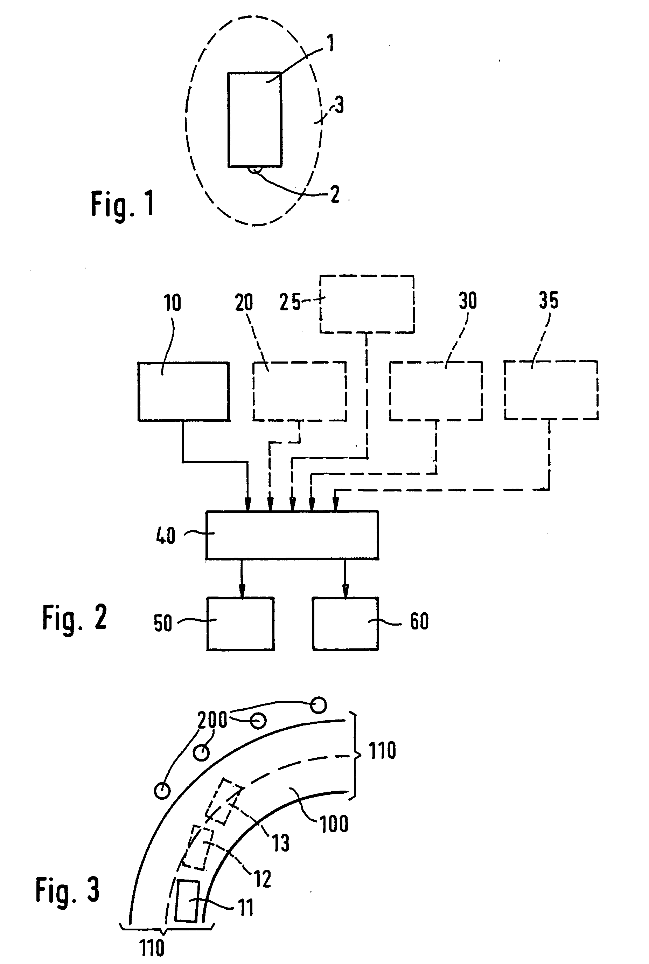

In Figur 1 ist ein erfindungsgemäßes Fahrzeug 1 mit seinem Fahrzeugumfeld 3 (mit gestrichelter Linie begrenzter Bereich) dargestellt. Zur Überwachung des Fahrzeugumfelds 3 umfasst das Fahrzeug 1 einen Sensor 2. Der Sensor 2 umfasst beispielsweise eine Radar- und/oder Videosensorik. Der Sensor 2 dient der Aufnahme von Informationen aus dem Fahrzeugumfeld 3 bzw. der Umgebung des Fahrzeugs. Hierbei werden durch den Sensor 2 insbesondere die im Zusammenhang mit Figur 3 erläuterten Fahrspuren und andere Objekte erfasst. Erfindungsgemäß werden als Sensor 2 insbesondere mehrere gleiche oder unterschiedliche Sensoren eingesetzt.

In Figur 2 ist ein Blockschaltbild der Informationsverarbeitung in dem erfindungsgemäßen Fahrzeug 1 dargestellt. Der Sensor 2 liefert Informationen 10, die an eine Verarbeitungseinheit 40 übertragen werden. Hierzu ist der Sensor 2 mit der Verarbeitungseinheit 40 verbunden. Die Verarbeitungseinheit 40 wertet die Informationen 10 aus und leitet sie an einen Bewegungszustandsaktor 50 bzw. an eine Hinweiseinrichtung 60 weiter. Hierzu ist die Verarbeitungseinheit 40 jeweils mit dem Bewegungszustandsaktor 50 und der Hinweiseinrichtung 60 verbunden. Erfindungsgemäß ist es so, dass der Bewegungszustandsaktor 50 und die Hinweiseinrichtung 60 alternativ oder ergänzend zueinander vorgesehen sind, d.h. erfindungsgemäß ist ein Fahrzeug sowohl derart vorgesehen, dass es lediglich über den Bewegungszustandsaktor 50 oder über die Hinweiseinrichtung 60 oder aber derart vorgesehen, dass es sowohl über den Bewegungszustandsaktor 50 und über die Hinweiseinrichtung 60 verfügt. Der Bewegungszustandsaktor 50 ist insbesondere als Aktor, der auf die Bremse einwirkt, ausgebildet, kann aber auch als beschleunigender Aktor, beispielsweise als aktiver Eingriff in die Motorsteuerung, vorgesehen sein. Die Hinweiseinrichtung 60 ist insbesondere als Signalisierungsmittel für an den Fahrer bzw. den Fahrzeugführer zu übermittelnde Warninformationen bzw. Hinweisinformationen vorgesehen.

Alternativ oder ergänzend umfasst das erfindungsgemäße Fahrzeug 1 auch einen Geschwindigkeitssensor 20, einen Bewegungszustandsdetektor 30 und einen Fahrerwunschdetektor 35. Hierzu sind jeweils gegebenenfalls der Geschwindigkeitssensor 20, der Bewegungszustandsdetektor 30 und der Fahrerwunschdetektor 35 mit der Verarbeitungseinheit verbunden. Für die Verarbeitung der Information, ob ein Abbiegevorgang vorgesehen ist, beispielsweise ob ein Blinker gesetzt ist oder nicht, umfaßt das Fahrzeug 1 weiterhin einen Blinkerdetektor 25, der ebenfalls mit der Verarbeitungseinheit 40 verbunden ist.

Erfindungsgemäß sind dann folgende Szenarien denkbar: Wenn der Blinkerdetektor 25 einen gesetzten Blinker detektiert und damit einen Abbiegewunsch erkennt, wobei die Informationen 10 ein Muster derart aufweisen, dass die Verarbeitungseinheit 40 einen für einen Abbiegevorgang hinderlichen Verkehr detektiert, wird entweder ein Warnhinweis mittels der Hinweiseinrichtung 60 oder aber ein Bremseingriff mittels des Bewegungszustandsaktors 50 abgegeben bzw. vorgenommen. Falls ein Bewegungszustandsaktor 50, d.h. beispielsweise eine Bremseingriffsmöglichkeit in dem Fahrzeug 1 vorhanden ist, ist es jedoch vorgesehen, in jedem Fall dem Fahrer bzw. dem Fahrzeugführer die Möglichkeit zu geben, den automatisch mittels des Bewegungszustandsaktors 50 vorgenommenen Bremseingriff manuell zu überstimmen bzw. zu übersteuern. Hierzu ist der Fahrerwunschdetektor 35 vorgesehen. Dieser ist beispielsweise als Schalter ausgebildet, den ein Fahrer betätigen kann, so dass der automatisch durchgeführte Bremseingriff mittels des Bewegungszustandsaktors 50 nicht oder nur in abgeschwächter Form durchgeführt wird. Ein solcher Schalter kann beispielsweise auch derart realisiert sein, dass beim Vorliegen oder der Ankündigung eines automatischen Bremseingriffs ein erhöhter Druck auf das Gaspedal oder auch ein anderer, den Beschleunigungswunsch ausdrückender Sensor oder Detektor als Fahrerwunschdetektor 35 Verwendung findet.

In einer anderen Ausgestaltung der Erfindung unterstützt das Fahrzeug 1 die Einhaltung der Fahrspur während eines automatischen Eingriffs des Bewegungszustandsaktors 50. Hierzu wird der Grad der Einhaltung der Fahrspur aus den Informationen 10 geschlossen, die der Sensor 2 der Verarbeitungseinheit 40 zuführt. Falls die Verarbeitungseinheit 40 aus den Informationen 10 den Schluss zieht, dass ein Verlassen der Fahrspur vorliegt, wird wie in der vorhin beschriebenen Situation auch der Bewegungszustandsaktor 50 und/oder die Hinweiseinrichtung 60 aktiviert. Der Bewegungszustandsaktor 50 ist hierbei insbesondere als ESP-Regelung (Elektronisches Stabilitätsprogramm) vorgesehen, die ebenfalls dann aktiviert wird, wenn das Fahrzeug 1 sich in einem fahrdynamischen Grenzbereich befindet. Erfindungsgemäß ist es insbesondere vorgesehen, den Bewegungszustandsaktor sowohl dann zu aktivieren, wenn ein solcher fahrdynamischer Grenzbereich bereits erreicht ist oder bereits dann zu aktivieren, wenn ein fahrdynamischer Grenzbereich noch nicht erreicht ist, jedoch die Informationen 10 signalisieren, dass das Fahrzeug 1 von der Fahrspur abgekommen ist bzw. abzukommen droht. Aus dieser letzten Alternative ergibt sich eine prädiktive Fahrdynamikregelung durch die Nutzung der Umweltsensorik, d.h. des Sensors 2. Als wichtige Eingangsgrößen für die Fahrdynamikregelung sind der Lenkeinschlagswinkel und die Drehrate des Fahrzeugs um eine vertikale Achse bzw. die Gierrate wichtig. Daher spielen diese beiden Größen zur Beantwortung der Frage, ob ein fahrdynamischer Grenzbereich vorliegt oder nicht, eine große Rolle. Der Bewegungszustandsdetektor 30 ermittelt daher insbesondere diese beiden Größen zusammen mit der Geschwindigkeit des Fahrzeugs 1 und verwendet sie zur Beurteilung, ob sie miteinander vereinbar sind oder nicht. Bei Vereinbarkeit liegt definitionsgemäß keine fahrdynamische Grenzsituation vor; bei Unvereinbarkeit liegt eine fahrdynamische Grenzsituation vor.

Für die Situation des Abbiegens des Fahrzeugs 1 über die Fahrspur des Gegenverkehrs kann der Fahrer zusätzlich unterstützt werden. Wird beispielsweise aus dem gesetzten Blinker, sowie den Spurinformationen ein Abbiegewunsch über die Gegenfahrspur erkannt, so wird aus den Informationen 10 des Sensors 2, d.h. aus der Umfeldsensorik, errechnet, ob Kollisionswahrscheinlichkeit mit entgegenkommenden Fahrzeugen besteht. Bei stehendem Fahrzeug 1 wird der Fahrer auf diese Kollisionswahrscheinlichkeit hingewiesen, insbesondere über die Hinweiseinrichtung 60. Zusätzlich kann das Fahrzeug 1 durch einen aktiven, aber vom Fahrer überstimmbaren Bremseingriff gehalten werden, d.h. durch eine Aktivierung des Bewegungszustandsaktors 50. Ein solcher Bremseingriff bzw. ein Eingriff des Bewegungszustandsaktors 50 wird bei Verschwinden der Kollisionsgefahr wieder gelöst. Will der Fahrer trotz Gegenverkehrs losfahren, so kann dieser durch die Hinweiseinrichtung 60 zusätzlich gewarnt werden. Hierdurch ist es möglich, den Fahrer gezielt bei der Querung der Gegenfahrbahn zu unterstützen und insbesondere bei der Beachtung von Vorfahrtsregeln an Ampeln bzw. in Kreuzungsbereichen Hilfestellung zu leisten. Dies bietet ein hohes Potential zur Unfallvermeidung, weil Unfallstatistiken belegen, dass gerade in Kreuzungsbereichen bzw. an Ampeln ein stark erhöhtes Unfallrisiko besteht. Der erfindungsgemäße Kreuzungsassistent verwendet die Informationen 10 des Sensors 2 aus dem Fahrzeugumfeld 3 zur Erkennung von Ampeln und ihrem Zustand, zur Erkennung von Haltegebots- und Vorfahrtgewährenzeichen und hilft dem Fahrer durch Warnung mittels der Hinweiseinrichtung 60 und/oder durch gestufte Bremseingriffe mittels des Bewegungszustandsaktors 50.

In Figur 3 ist eine Fahrbahn 110 dargestellt, die einem Kurvenverlauf folgt. Die Fahrbahn 110 umfasst eine Fahrspur 100, auf der sich ein erfindungsgemäßes Fahrzeug 11, 12, 13 befindet, die zum Bezugszeichen 11 gehörende Darstellung des Fahrzeugs ist mit durchgezogener Linie in Figur 3 dargestellt, während die zum Bezugszeichen 12 und 13 gehörende Darstellung des Fahrzeugs in gestrichelter Linie dargestellt ist. Dies soll verdeutlichen, dass die mit den Bezugszeichen 12 und 13 versehene Darstellung des Fahrzeugs den Aufenthaltsort des Fahrzeugs zu späteren Zeitpunkten angibt. Wie hieraus deutlich wird, entfernt sich das Fahrzeug von seiner Spur 100 und bewegt sich auf eines der außerhalb der Fahrbahn 110 befindlichen Hindernisse 200 zu. Die Hindernisse 200 bezeichnen beispielsweise einen Baum oder ähnliches. Durch die erfindungsgemäße Berücksichtigung der Informationen 10, die vom Sensor 2 geliefert werden, ist es möglich, solche Hindernisse 200 mit zu berücksichtigen, wenn der Bewegungszustandsaktor 50 in den Bewegungszustand des Fahrzeugs 1 eingreift.

## Patentansprüche

1. Fahrzeug (1) mit wenigstens einem Sensor (2) zur Detektion des Fahrzeugumfeldes (3) und mit einem Bewegungszustandsaktor (50) zur Einwirkung auf den Bewegungszustand des Fahrzeugs (1), wobei der Bewegungszustandsaktor (50) bei seiner Aktivierung auf den Bewegungszustand des Fahrzeug (1) einwirkt, **dadurch gekennzeichnet, dass** der Bewegungszustandsaktor (50) eine Bremse des Fahrzeugs ist, dass ferner eine mit dem Blinkerdetektor (25) verbundene Verarbeitungseinheit (40) vorgesehen ist, an die die vom Sensor (2) gelieferten Informationen (10) übertragen werden, und die derart ausgestaltet ist, dass ein Abbiegewunsch des Fahrers des Fahrzeugs (1) erkannt wird, durch welchen die Querung einer Fahrbahn zu erwarten ist und die ferner derart konfiguriert ist, dass aus den empfangenen Informationen (10) eine Kollisionswahrscheinlichkeit errechnet wird und der Bewegungszustandsaktor (50) aktiviert wird, wenn bei erkanntem Abbiegewunsch eine Kollisionswahrscheinlichkeit ermittelt wurde.

2. Fahrzeug (1) mit wenigstens einem Sensor (2) zur Detektion des Fahrzeugsumfelds (3) und mit einer Hinweiseinrichtung (60), wobei die Hinweiseinrichtung (60) bei Aktivierung einem Fahrzeugführer Hinweise oder Warnungen signalisiert, **dadurch gekennzeichnet, dass** ferner eine mit dem Blinkerdetektor (25) verbundene Verarbeitungseinheit (40) vorgesehen ist, der die von dem wenigstens einen Sensor (2) gelieferten Informationen (10) übertragen werden, und die derart konfiguriert ist, dass sie einen Abbiegewunsch des Fahrers erkennt, bei welchem eine Querung einer Fahrbahn zu erwarten ist und aus den detektierten Informationen (10) eine Kollisionswahrscheinlichkeit errechnet sowie die Hinweiseinrichtung (60) für den Fall aktiviert, dass bei erkanntem Abbiegewunsch eine Kollisionswahrscheinlichkeit ermittelt wurde.

3. Fahrzeug nach Anspruch 1, **dadurch gekennzeichnet, dass** das Fahrzeug (1) eine Hinweiseinrichtung (60) umfaßt, wobei die Hinweiseinrichtung (60) vorgesehen ist, bei Aktivierung der Hinweiseinrichtung (60) einem Fahrzeugführer Hinweise oder Warnungen zu signalisieren, wobei die von dem Sensor (2) detektierten Informationen (10) ebenfalls zur Aktivierung der Hinweiseinrichtung (60) für den Fall vorgesehen sind, dass bei für einen Abbiegevorgang hinderlichem Verkehr ein Abbiegen des Fahrzeugs (1) vorgesehen ist.

4. Fahrzeug (1) nach einem der Ansprüche 1 oder 3, **dadurch gekennzeichnet, dass** der Bewegungszustandsaktor (50) in Abhängigkeit eines Lenkwinkels und einer Gierrate aktivierbar ist und dass der Bewegungszustandsaktor (50) bei mangelnder Vereinbarkeit des Lenkwinkels und der Gierrate aktiviert wird.

5. Fahrzeug (1) nach Anspruch 4, **dadurch gekennzeichnet, dass** der Bewegungszustandsaktor (50) auch bei Vereinbarkeit des Lenkwinkels und der Gierrate aktiviert wird, sofern über Sensor (2) festgestellt wird, dass eine mangelnde Vereinbarkeit von Lenkwinkel und Gierrate unmittelbar bevorsteht.

6. Fahrzeug (1) nach Anspruch 4 oder 5, **dadurch gekennzeichnet, dass** die von dem Sensor (2) detektierten Informationen (10) während der Aktivierung des Bewegungszustandsaktors (50) derart verwendet werden, dass auf eine Vermeidung der Begegnung des Fahrzeugs (1) mit Hindernissen (200) hingewirkt wird und/oder dass ein Verlassen der Fahrspur, die mit Hilfe des Sensors (2) erkannt wird, vermieden wird.

7. Fahrzeug (1) nach Anspruch 1, 3, 4, 5 oder 6, **dadurch gekennzeichnet, dass** das Fahrzeug (1) einen Fahrerwunschdetektor (35) aufweist, wobei der Fahrerwunschdetektor (35) vorgesehen ist, wenigstens einen Fahrerwunsch zu detektieren, wobei die Aktivierung des Bewegungszustandsaktors (50) bei Detektion eines zur Aktivierung des Bewegungszustandsaktors (50) zumindest teilweise entgegengesetzten Fahrerwunsches zumindest teilweise aufhebbar oder in ihrer Wirkung verringerbar vorgesehen ist.

## Claims

1. Vehicle (1) comprising at least one sensor (2) for detecting the area (3) surrounding the vehicle and comprising a movement state actuator (50) for acting on the movement state of the vehicle (1), the movement state actuator (50) acting on the movement state of the vehicle (1) when said actuator (50) is activated, **characterized in that** the movement state actuator (50) is a brake of the vehicle, **in that** in addition a processing device (40) connected to the flashing indicator detector (25) is provided to which the information (10) supplied by the sensor (2) is transmitted and which is configured in such a way that a request of the driver of the vehicle (1) to turn as a result of which the crossing of a carriageway is to be expected is detected, and which processing unit (40) is additionally configured in such a way that a collision probability is calculated from the received information (10) and the movement state actuator (50) is activated if a collision probability has been determined when a request to turn has been detected.

2. Vehicle (1) comprising at least one sensor (2) for detecting the area (3) surrounding the vehicle and comprising an indicator device (60), the indicator device (60) signalling indications or warnings to a vehicle driver when it is activated, **characterized in that** in addition a processing device (40) which is connected to the flashing indicator light detector (25) is provided, information (10) which is supplied by the at least one sensor (2) being transmitted to said processing unit (40) and said processing unit being configured in such a way that it detects a request by the driver to turn for which crossing of a vehicle carriageway is to be expected, a collision probability is calculated from the detected information (10) and the indicator device (60) is activated if a collision probability has been determined when a request to turn has been detected.

3. Vehicle according to Claim 1, **characterized in that** the vehicle (1) comprises an indicator device (60), the indicator device (60) being provided for signalling indications or warnings to a vehicle driver when the indicator device (60) is activated, the information (10) which is detected by the sensor (2) also being provided for activating the indicator device (60) if there is provision for the vehicle (1) to turn when there is traffic which impedes a turning process.

4. Vehicle (1) according to one of Claims 1 or 3, **characterized in that** the movement state actuator (50) can be activated as a function of a steering angle and a yaw rate, and **in that** the movement state actuator (50) is activated when there is a lack of compatibility between the steering angle and the yaw rate.

5. Vehicle (1) according to Claim 4, **characterized in that** the movement state vector (50) is activated even when the steering angle and the yaw rate are compatible in that a sensor (2) detects that a lack of compatibility of this steering angle and yaw rate is directly imminent.

6. Vehicle (1) according to Claim 4 or 5, **characterized in that** the information (10) which is detected by the sensor (2) is used during the activation of the movement state actuator (50) in such a way that action is taken to promote avoidance of a collision between the vehicle (1) and obstacles (200) and/or **in that** departure from the lane which is detected using the sensor (2) is avoided.

7. Vehicle (1) according to Claim 1, 3, 4, 5 or 6, **characterized in that** the vehicle (1) has a driver's request detector (35), the driver's request detector (35) being provided to detect at least one driver's request, there being provision for it to be possible to at least partially cancel the activation of the movement state actuator (50), or reduce its effect, when a driver's request which is at least partially opposed to the activation of the movement state actuator (50) is detected.

## Revendications

1. Véhicule (1) comportant au moins un capteur (2) pour détecter l'environnement périphérique (3) du véhicule ainsi qu'un actionneur d'état de mouvement (50) pour agir sur l'état de mouvement du véhicule (1), l'actionneur d'état de mouvement (50) agissant par sa mise en oeuvre sur l'état de mouvement du véhicule (1),
**caractérisé en ce que**
l'actionneur d'état de mouvement (50) est un frein du véhicule qui comporte en outre une unité de traitement (40) reliée à un détecteur de clignotant (25) recevant les informations (10) fournies par le capteur (2) et qui détecte une demande de changement de direction du conducteur du véhicule (1) permettant de prévoir qu'il coupe la voie de circulation et qui en outre, est configurée pour qu'à partir des informations (10) reçues elle calcule une probabilité de collision et active l'actionneur d'état de mouvement (50) si une probabilité de collision résulte du changement de direction détecté.

2. Véhicule (1) comportant au moins un capteur (2) pour détecter l'environnement périphérique (3) du véhicule ainsi qu'une installation indicatrice (60), cette installation indicatrice (60) activée, signalant au conducteur du véhicule des indications ou des avertissements,
**caractérisé en ce qu'**
il comporte en outre une unité de traitement (40) reliée au détecteur de clignotant (25) recevant les informations (10) fournies par au moins un capteur (2) et détectant une demande de changement de direction du conducteur laissant prévoir qu'il va traverser une voie de circulation et à partir des informations détectées (10), elle calcule une probabilité de collision et active l'installation indicatrice (60) au cas où, dans la détection de l'intention de changement de direction, elle détermine une probabilité de collision.

3. Véhicule selon la revendication 1,
**caractérisé en ce qu'**
il comporte une installation indicatrice (60) qui, activée, signale des indications ou des avertissements au conducteur du véhicule,
les informations (10) détectées par le capteur (2) étant également prévues pour activer l'installation indicatrice (60) au cas où il est prévu une circulation constituant obstacle pour une manoeuvre de changement de direction du véhicule (1).

4. Véhicule (1) selon l'une des revendications 1 ou 3,
**caractérisé en ce que**
l'actionneur d'état de mouvement (50) est activé en fonction de l'angle de braquage et d'une vitesse de lacet et
l'actionneur d'état de mouvement (50) est activé en cas de manque de concordance entre l'angle de braquage et la vitesse de lacet.

5. Véhicule (1) selon la revendication 4,
**caractérisé en ce que**
l'actionneur d'état de mouvement (50) est également activé lorsqu'il y a concordance entre l'angle de braquage et la vitesse de lacet, dans la mesure où le capteur (2) constate qu'un manque de concordance entre l'angle de braquage et la vitesse de lacet est imminent.

6. Véhicule (1) selon la revendication 4 ou 5,
**caractérisé en ce que**
les informations (10) détectées par le capteur (2) pendant l'activation de l'actionneur d'état de mouvement (50) sont utilisées pour agir pour éviter la rencontre du véhicule (1) et des obstacles (200) et/ou éviter de quitter la voie de circulation détectée à l'aide du capteur (2).

7. Véhicule (1) selon les revendications 1, 3, 4, 5, 6,
**caractérisé en ce que**
le véhicule (1) comporte un détecteur de souhait de conducteur (50) qui détecte au moins un souhait du conducteur et l'activation de l'actionneur d'état de mouvement (50) est au moins en partie neutralisée ou son effet est atténué lors de la détection d'un souhait du conducteur qui s'oppose au moins en partie à l'activation de l'actionneur d'état de mouvement (50).
